Europäisches Patentamt

European Patent Office

Office européen des brevets

(11) Publication number: **0 070 100**
**B1**

(12) **EUROPEAN PATENT SPECIFICATION**

(45) Date of publication of patent specification: **27.05.87**

(21) Application number: **82303052.3**

(22) Date of filing: **14.06.82**

(51) Int. Cl.⁴: **C 04 B 41/50,** H 05 B 7/085,
B 05 B 7/00

(54) Protection of graphite electrodes.

(30) Priority: **26.06.81 GB 8119714**
**20.03.82 GB 8208226**

(43) Date of publication of application:
**19.01.83 Bulletin 83/03**

(45) Publication of the grant of the patent:
**27.05.87 Bulletin 87/22**

(84) Designated Contracting States:
**AT BE CH DE FR GB IT LI LU NL SE**

(56) References cited:
DE-A-2 731 894
FR-A-1 369 372
FR-A-2 191 450
GB-A-1 291 095
GB-A-1 386 611
GB-A-1 431 892
US-A-4 076 175

CHEMICAL ABSTRACTS, vol. 90, no. 22, May 28, 1979, page 315, abstract no. 173486z, COLUMBUS OHIO (US), R. PAMPUCH et al.: "Combined inorganic powder for production of polycrystalline coatings by plasma or gas torch spraying"

(73) Proprietor: **FOSECO INTERNATIONAL LIMITED**
**285 Long Acre**
**Nechells Birmingham B7 5JR (GB)**

(72) Inventor: **Dunkelmann, Dietger**
**Petersfeldstrasse 4**
**Bocholt (DE)**
Inventor: **Jaunich, Helmut**
**Sudring 26**
**D-4281 Raesfeld (DE)**
Inventor: **Schiffarth, Josef**
**Winterswijker Strasse 81**
**D-4290 Bocholt-Barlo (DE)**
Inventor: **Greensmith, Dennis**
**44 Roach Dosthill**
**Tamworth Staffordshire (GB)**
Inventor: **Hammerton, Roderic Hugh**
**Holly Bank Common Lane**
**Bedhall Staffordshire (GB)**
Inventor: **Wall, Colin John**
**21 Peverell Drive**
**Hall Green Birmingham (GB)**

(74) Representative: **Warman, Charles Alfred**
**Group Patents Department Foseco Minsep**
**International Limited 285 Long Acre**
**Nechells Birmingham B7 5JR (GB)**

Courier Press, Leamington Spa, England.

## Description

The invention concerns protection of graphite electrodes from oxidation, material for this purpose and the production of such material.

Graphite electrodes are used in the electric arc steelmaking process and during the process substantial loss of graphite from the electrodes occurs not only from the tip of the electrode i.e. in the arc zone but also to a considerable extent from the side of the electrode by oxidation.

Graphite for electrodes for electric arc steelmaking furnaces is expensive and over many years there have been numerous proposals to provide protective matter on the side of the electrode to reduce loss of graphite oxidation. None of the processes is ideal: one difficulty is that the protective matter may interfere with electrical contact between the electrode and the clamp used to supply current to the electrode, another difficulty is that the protective matter may not adhere well to the electrode under the conditions of use and yet another difficulty is that application of the protective matter may be troublesome and impractical to effect at sufficiently frequent intervals.

British Patent Specification 1386611 describes applying a powder mixture to a hot graphite electrode to form a protective coating.

The powder mixture comprises a graphite-wetting matrix material having a melting point below 1000°C and a refractory filler. The matrix material fuses on the hot electrode to form an adherent continuous coating and the protection provided by this coating is enhanced by the additional presence of the refractory filler in the coating. The filler has the important property of increasing the viscosity of the fused matrix so that the coating does not drip off the electrode in use and yet the coating retains a degree of fluidity/plasticity over a wide temperature range thereby enabling it to survive substantial temperature fluctuations without cracking.

The application of powder mixtures to graphite electrodes to form a protective coating poses a number of problems. For example, the ingredients of powder mixtures generally tend to segregate thereby making it difficult to contact a hot graphite electrode with a uniform powder mixture to form a suitable protective coating. The problems associated with the use of powder mixtures to protect graphite electrodes are avoided by a subsequently developed process involving applying to a hot graphite electrode preformed boards of material, comprising graphite-wetting fusible material, to form a protective coating. This process is described in British Patent Specification 1431891 and is in use in a number of countries.

According to the present invention a method of protecting a graphite electrode comprises contacting the electrode with particulate matter, comprising particles each containing both a graphite-wetting fusible matrix material and a refractory filler, whilst the electrode is at an elevated temperature such that the matrix material fuses at least partially and a protective coating comprising the refractory filler in a matrix of the matrix material is formed on the electrode.

As the particulate matter is used in the above method comprises particles in which both the essential ingredients are present, the ingredients of these particles do not tend to segregate. Preferably at least 70%, more preferably 90%, by weight of the particulate matter is in the form of particles comprising both the essential ingredients. If separate particles of a graphite-wetting fusible matrix material and of a refractory filler are applied to a hot graphite electrode, there is a marked tendency for the refractory filler, which does not have latent adhesive properties, to fail to adhere and thus the composition of the resultant coating does not correspond to that of the material applied and the degree of protection is reduced and some of the refractory filler wasted. These disadvantages are minimised by the method of the invention by virtue of the fact that some or all the refractory filler is present in the form of particles also containing the matrix material and the matrix material is able to fuse at least partially, and thus adhere and serve as an adhesive for the refractory filler, on contact with the hot electrode.

Suitable matrix materials and refractory fillers generally have substantially different densities and thus powder mixtures of separate particles of these substances have a tendency to segregate as a result of the density difference. Also, it may be difficult to obtain a suitable refractory filler having particle sizes similar to the particle sizes desired for the matrix material in a powder mixture and thus segregation may occur as a result of the different particle sizes. In contrast, in the case of the present invention, the above causes of segregation can be minimised in that particles comprising both the essential ingredients and having narrow ranges of density and particle size can be obtained.

The graphite-wetting fusible matrix material is preferably a boron compound or a boron-containing glass. Preferably the graphite-wetting material fuses at relatively low temperatures but is not unduly volatile at rather higher temperatures. A wide variety of refractory fillers are suitable, especially refractory metals, oxides, aluminosilicates, carbides, nitrides, silicides or borides, such as chromic oxide, magnesium oxide, zirconium oxide, titanium oxide, silica, alumina, silicon carbide, tungsten carbide, boron carbide, boron nitride, silicon nitride, titanium boride, zirconium boride and zirconium carbide.

The particular matter preferably contains 30 to 80%, more preferably 55 to 70% by weight of refractory filler and 20 to 70%, more preferably 30 to 45%, by weight of graphite-wetting material. If the method is to be conducted when the electrode is very hot the percentage of the refractory filler is preferably in the upper part of the range whilst if it is rather less hot this percentage is preferably in the lower part of the range.

Preferably the maximum particle size of the particles of the particulate matter is 0.5 mm, as larger particles are prone to rebound from the electrode, and preferably not more than 10% of the weight of the matter is provided by particles having a particle size of 0.1 mm or less, as higher amounts of such particles may result in dust and/or segregation problems to some extent. Preferably, the minimum size of the particles is 0.125 mm. By using the particulate matter conforming to these particle size limitations the achievement of an effective protective coating is facilitated: even the smaller particles are not too subject to being carried away in the strong convection currents prevailing near hot electrodes and even the larger particles have little tendency to rebound from the hot electrode.

According to the further aspect of the present invention, particulate matter for the protection of graphite electrodes comprises particles each containing both a graphite-wetting material having a melting point below 1000°C and a refractory filler.

The particulate matter comprising the particles in which both the essential ingredients are present is preferably made in accordance with the invention by heating together a mixture of the ingredients to fuse the graphite-wetting material at least partially and to cause it to adhere to the refractory filler to form a coherent mass e.g. in the form of a block, plate, strip or rod and then crushing this mass and sieving it to obtain the desired particle sizes.

Another way of making the particulate matter comprises pressing a simple mixture of the ingredients by using a heated roller or rollers such that during the pressing the matrix material fuses at least partially and adheres to the refractory filler. The pressed product is then crushed and sieved to give the desired particle sizes. If desired, the hot, pressed product may be subjected to thermal shock e.g. by a blast of cold gas in order to fracture it or at least weaken it to aid the subsequent crushing.

Yet another way of making the particulate matter is to cause a simple mixture of the ingredients to pass through a heated zone where the matrix material fuses at least partially and adheres to the refractory filler to form agglomerated particles.

The agglomerated particles pass into a cooler zone where the matrix material becomes solid again and thus the agglomerated particles formed in the heated zone do not adhere to each other.

If the agglomerated particles as formed are not of the desired size, they may be subjected to thermal shock to fracture or at least weaken them to aid subsequent crushing.

In the method of the invention the particulate matter is applied only to that part of the electrode which, in use, is beneath the clamp used to supply the electric current to the electrode. The particulate matter is applied to the electrode whilst the surface of the electrode is at a sufficiently high temperature to cause at least partial fusion of the matrix material. The necessary temperature is preferably achieved by virtue of the use of the electrode, in an electric arc steelmaking furnace. The particulate matter can conveniently be applied to a hot electrode that has been removed from a furnace after a period of use. Alternatively, for convenience of furnace operation, the particulate matter can be applied to a hot electrode in position at the furnace.

During use of the electrode, graphite is inevitably lost from the tip of the electrode and this is compensated for by lowering the electrode further into the furnace, correspondingly moving the clamp further up the electrode and periodically joining a new length of electrode to the top of the existing electrode. If the repositioning of the clamp and lowering of the electrode is carried out whilst the electrode remains in the furnace, the part of the electrode below the new position of the clamp can then be coated as before. Likewise, at any time when a hot electrode is removed from the furnace, a further coating can be applied and, if the clamp is repositioned at that time, a previously uncoated part of the electrode can then be coated.

The protective matter may be either mechanically conveyed to the electrode without the use of a carrier gas stream or the protective matter may be fed to a chamber where it is entrained in a carrier gas to form a stream having a high ratio of protective matter to carrier gas and the stream is then conveyed to the electrode. However, it is preferred to use a carrier gas stream to entrain and discharge the protective matter.

In the case of the procedure using a carrier gas it is preferred that the proportion of protective matter in the stream should be as high as is compatible with conveniently conveying the stream to the electrode as this reduces any tendency for the protective matter to rebound from the electrode.

The method and material of the present invention is illustrated by the following example:

### Example

Two mixtures of boric oxide and silicon carbide were made, one (mixture A) containing 40% by weight of boric oxide and 60% of silicon carbide and the other (mixture B) 35% by weight of boric oxide and 65% of silicon carbide.

The two mixtures were heated in trays at a temperature of 450°C for 1 hour and yielded hard plates on cooling. The plates were then separately crushed and the crushed matter sieved in each case to provide compositions containing 50% by weight of particles having sizes less than 0.5 mm but greater than 0.25 mm and 50% by weight of particles having sizes not greater than 0.25 mm but greater than 0.125 mm. Substantially all of each of the compositions was composed of particles comprising both boric oxide and silicon carbide.

Two graphite electrodes X and Y, of 550 mm diameter were raised from an electric arc steelmaking furnace immediately after a period of use and shortly afterwards the compositions derived from mixtures A and B were applied in longitudinally extending strips 150 mm wide. The application was effected by fluidising the compositions in a relatively small volume of air and spraying the fluidised matter on to the electrode at the furnace.

After the electrodes had cooled slightly the strips were inspected and those derived from mixture A appeared to have a very hard, glazed, impermeable surface whilst those derived from mixture B had an unglazed, more porous appearance. Some hours later the electrodes were lowered and put into service again in the furnace.

After 100 minutes in the furnace electrode Y was removed (and replaced by another electrode) and examined when cool. The strip derived from mixture A was 1—2 mm thick and adhered very well. The strip derived from mixture B was 1 mm thick and adhered well. Comparison with uncoated areas of the electrode showed that the strips were protecting the underlying graphite.

Electrode X was removed from the furnace after 6.5 hours, at the end of the cast, and examined when cool. The positions of both the strips could still be detected although much of the matter had disappeared, especially towards the hotter end of the electrode. In the case of the strip derived from mixture A, graphite in the strip area stood proud of the surrounding unprotected graphite by up to 10—12 mm whilst in the case of the strip derived from mixture B the protected graphite stood proud by up to 5 mm.

The above Example shows that the special type of particulate matter of the present invention enables graphite electrodes to be effectively protected. Little of the matter applied is wasted and pollution is minimal. Moreover, the method of the present invention does not require the relatively complicated apparatus needed for the method described in British Patent Specification 1431891 mentioned above nor does it have that method's limitation of requiring, in practice, preformed protection boards of different shapes and/or sizes for use with electrodes of different diameters. Moreover whereas the method of Specification 1431891 in practice generally requires removal of the electrodes from the furnace the method of the present invention can be effected either with the electrode at the furnace, thereby giving operational benefits, or with the electrode removed from the furnace.

**Claims**

1. A method of protecting a graphite electrode which comprises contacting the electrode with particulate matter comprising a graphite-wetting fusible matrix material and a refractory filler, whilst the electrode is at an elevated temperature such that the matrix material fuses at least partially and a protective coating comprising the refractory filler in a matrix of the matrix material is formed on the electrode characterised in that the particulate matter comprises particles each containing both a graphite-wetting fusible matrix material and a refractory filler.

2. Particulate matter for the protection of graphite electrodes which matter comprises a graphite-wetting fusible matrix material having a melting point below 1000°C and a refractory filler, characterised in that the particulate matter comprises particles each containing both a graphite-wetting fusible matrix material having a melting point below 1000°C and a refractory filler.

3. Particulate matter according to claim 2 characterised in that it comprises at least 70% by weight of particles each containing both a graphite-wetting fusible matrix material and a refractory filler.

4. Particulate matter according to claim 3 characterised in that it comprises at least 90% by weight of particles each containing both a graphite-wetting fusible matrix material and a refractory filler.

5. Particulate matter according to any one of claims 2 to 4 characterised in the graphite-wetting fusible matrix material is a boron compound or a boron-containing glass.

6. Particulate matter according to any of claims 2 to 5 characterised in that the refractory filler comprises at least one refractory metal oxide, aluminosilicate, carbide, nitride, silicide or boride.

7. Particulate matter according to any of claims 2 to 6 characterised in that the particulate matter comprises 30 to 80% by weight of refractory filler and 20 to 70% by weight of graphite-wetting fusible matrix material.

8. Particulate matter according to any of claims 2 to 7 characterised in that the maximum particle size of the particles of the particulate matter is 0.5 mm and not more than 10% by weight of the matter comprises particles having a particle size of 0.1 mm or less.

9. Particulate matter according to claim 8 characterised in that the minimum size of the particles is 0.125 mm.

10. A process for the production of particulate matter for the protection of graphite electrodes characterised in that a mixture of a graphite-wetting fusible matrix material and a refractory filler is heated to fuse the graphite-wetting material at least partially and to cause it to adhere to the refractory filler to form a coherent mass and then crushing the said coherent mass and sieving it to obtain the desired particle size.

11. A process according to claim 10 characterised in that the heating is effected by pressing the mixture by use of at least one heated roller.

12. A process for the production of particulate matter for the protection of graphite electrodes characterised in that a mixture of a graphite-wetting fusible matrix material and a refractory filler is passed through a heated zone where the graphite-wetting material fuses at least partially and adheres to the refractory filler to form agglomerated particles and passing the said agglomerated particles into a cooler zone to solidify the graphite-wetting material whereby the said agglomerated particles do not adhere to each other and if necessary crushing the separated agglomerated particles and sieving them to give the desired particle sizes.

## Patentansprüche

1. Methode zum Schutz von Graphitelektroden, bei der man die Elektrode mit einem aus graphitbenetzendem schmelzbaren Matrixmaterial und einem feurfesten Füllstoff bestehenden teilchenförmigen Stoff in Berührung bringt, während sich die Elektrode auf einer erhöhten Temperatur befindet, so dass das Matrixmaterial zumindest teilweise schmilzt und sich auf der Elektrode ein aus dem feurfesten Füllstoff in einer Matrix des Matrixmaterials bestehender Schutzüberzug bildet, dadurch gekennzeichnet, dass der teilchenförmige Stoff aus Teilchen besteht, die je sowohl ein graphitbenetzendes schmelzbares Matrixmaterial als auch einen feuerfesten Füllstoff enthalten.

2. Teilchenförmiger Stoff zum Schutz von Graphitelektroden, der aus einem graphitbenetzenden schmelzbaren Matrixmaterial mit einem Schmelzpunkt unter 1000°C und einem feuerfesten Füllstoff besteht, dadurch gekennzeichnet, dass dessen Teilchen je sowohl ein graphitbenetzendes schmelzbares Matrixmaterial mit einem Schmelzpunkt unter 1000°C und einen feuerfesten Füllstoff enthalten.

3. Teilchenförmiger Stoff nach Anspruch 2, dadurch gekennzeichnet, dass er zu mindestens 70 Gew.-% aus Teilchen besteht, die je sowohl ein graphitbenetzendes schmelzbares Matrixmaterial als auch einen feuerfesten Füllstoff enthalten.

4. Teilchenförmiger Stoff nach Anspruch 3, dadurch gekennzeichnet, dass er zu mindestens 90 Gew.-% aus Teilchen besteht, die je sowohl ein graphitbenetzendes schmelzbares matrixmaterial als auch einen feuerfesten Füllstoff enthalten.

5. Teilchenförmiger Stoff nach einem der Ansprüche 2 bis 4, dadurch gekennzeichnet, dass als graphitbenetzendes schmelzbares Matrixmaterial eine Borverbindung oder ein borhaltiges Glas vorliegt.

6. Teilchenförmiger Stoff nach einem der Ansprüche 2 bis 5, dadurch gekennzeichnet, dass der feuerfeste Füllstoff aus mindestens einem feuerfesten Metall, Oxyd, Aluminosilikat, Carbid, Nitrid, Silicid oder Borid besteht.

7. Teilchenförmiger Stoff nach einem der Ansprüche 2 bis 6, dadurch gekennzeichnet, dass der teilchenförmige Stoff 30 bis 80 Gew.-% feuerfesten Füllstoff und 20 bis 70 Gew.-% graphitbenetzendes schmelzbares Matrixmaterial enthält.

8. Teilchenförmiger Stoff nach einem Ansprüche 2 bis 7, dadurch gekennzeichnet, dass die maximale Teilchengrösse der Teilchen des teilchenförmigen Stoffes 0,5 mm ist und der Stoff nicht mehr als 10 Gew.-% Teilchen einer Teilchengrösse von 0,1 mm oder kleiner enthält.

9. Teilchenförmiger Stoff nach Anspruch 8, dadurch gekennzeichnet, dass die Mindestgrösse der Teilchen 0,125 mm beträgt.

10. Verfahren zur Herstellung eines teilchenförmigen Stoffes zum Schutz von Graphitelektroden, dadurch gekennzeichnet, dass man ein Gemisch aus graphitbenetzendem schmelzbaren Matrixmaterial und einem feuerfesten Füllstoff erhitzt, um das graphitbenetzende Material zumindest teilweise zu schmelzen und am feuerfesten Füllstoff unter Bildung einer kohärenten Masse anhaften zu lassen und diese dann zerdrückt und siebt, um die gewünschte Teilchengrösse zu erhalten.

11. Verfahren nach Anspruch 10, dadurch gekennzeichnet, dass das Erhitzen durch Pressen des Gemisches mit mindestens einer erhitzten Walze erfolgt.

12. Verfahren zur Herstellung eines teilchenförmigen Stoffes zum Schutz von Graphitelektroden, dadurch gekennzeichnet, dass man ein Gemisch aus einem graphitbenetzenden schmelzbaren Matrixmaterial und einem feuerfesten Füllstoff durch eine erhitzte Zone leitet, wo das graphitbenetzende Material zumindest teilweise schmilzt und am feuerfesten Füllstoff unter Bildung agglomerierter Teilchen anhaftet, und diese zur Verfestigung des graphitbenetzenden Materials in eine kühlere Zone leitet, so dass diese agglomerierten Teilchen nicht aneinander haften, und nötigenfalls die getrennten agglomerierten Teilchen zerdrückt und auf die gewünschte Teilchengrösse siebt.

## Revendications

1. Un procédé de protection d'une électrode en graphite qui comprend la mise en contact de l'électrode avec une matière particulaire comprenant un matériau matrice fusible mouillant le graphite et une charge réfractaire, lorsque l'électrode est à une température élevée de façon à ce que le matériau matrice fonde au moins partiellement, et un revêtement protecteur comprenant la charge réfractaire dans une matrice du matériau matrice et formé sur l'électrode, caractérisé en ce que la matière particulaire comprend des particules contenant chacune à la fois un matériau matrice fusible mouillant le graphite et une charge réfractaire.

2. Matière particulaire pour la protection d'électrodes en graphites, laquelle matière comprend un matériau matrice fusible mouillant le graphite ayant un point de fusion inférieur à 1000°C et une charge réfractaire, caractérisée en ce que la matière particulaire comprend des particules comprenant chacune à la fois un matériau matrice fusible mouillant le graphite ayant un point de fusion inférieur à 1000°C et une charge réfractaire.

3. Matière particulaire selon la revendication 2 caractérisée en ce qu'elle comprend au moins 70% en poids de particules contenant chacune à la fois un matériau matrice fusible mouillant le graphite et une charge réfractaire.

4. Matière particulaire selon la revendication 3 caractérisée en ce qu'elle comprend au moins 90% en poids de particules contenant chacune à la fois un matériau matrice fusible mouillant le graphite et une charge réfractaire.

5. Matière particulaire selon l'une quelconque des revendications 2 à 4 caractérisée en ce que le matériau matrice fusible mouillant le graphite est un composé boré ou un verre contenant du bore.

6. Matière particulaire selon l'une quelconque des revendications 2 à 5 caractérisée en ce que la charge réfractaire comprend au moins un métal, un oxyde, un aluminosilicate, un carbure, un nitrure, un siliciure ou un borure réfractaires.

7. Matière particulaire selon l'une quelconque des revendications 2 à 6 caractérisée en ce que la matière particulaire comprend de 30 à 80% en poids de charge réfractaire et de 20 à 70% en poids de matériau matrice fusible mouillant le graphite.

8. Matière particulaire selon l'une quelconque des revendications 2 à 7 caractérisée en ce que la granulométrie maximum des particules de matière particulaire est de 0,5 mm et en ce que pas plus de 10% en poids de la matière comprend des particules ayant une granulométrie de 0,1 mm ou moins.

9. Matière particulaire selon la revendication 8 caractérisée en ce que la dimension minimum des particules est de 0,125 mm.

10. Un procédé pour la production de matière particulaire pour la protection d'électrodes en graphite caractérisé en ce que l'on chauffe un mélange d'un matériau matrice fusible mouillant le graphite et d'une charge réfractaire pour faire fondre le matériau mouillant le graphite au moins partiellement et pour le faire adhérer à la charge réfractaire pour former une masse cohérente et en ce que l'on concasse ensuite ladite masse cohérente et qu'on la tamise pour obtenir la granulométrie souhaitée.

11. Un procédé selon la revendication 10 caractérisé en ce que l'on effectue le chauffage en comprimant le mélange au moyen d'au moins un rouleau chauffé.

12. Un procédé pour la production de matière particulaire pour la protection d'électrodes en graphite caractérisé en ce que l'on fait passer un mélange de matériau matrice fusible mouillant la graphite et de charge réfractaire à travers une zone chauffée dans laquelle le matériau mouillant le graphite fond au moins partiellement et adhère à la charge réfractaire pour former des particules agglomérées et en ce qu'on fait passer lesdites particules agglomérées dans une zone plus fraîche pour solidifier le matériau mouillant le graphite, ce par quoi lesdites particules agglomérées n'adhèrent pas les unes aux autres, et, si nécessaire, en ce que l'on concasse les particules agglomérées séparées et qu'on les tamise pour donner les granulométries souhaitées.